(19) Europäisches Patentamt / European Patent Office / Office européen des brevets

(11) **EP 4 790 023 A1**

(12) **EUROPEAN PATENT APPLICATION**
published in accordance with Art. 153(4) EPC

(43) Date of publication:
**12.08.2026 Bulletin 2026/33**

(21) Application number: **25876060.2**

(22) Date of filing: **20.10.2025**

(51) International Patent Classification (IPC):
***C01D 15/04*** *(2006.01)*

(52) Cooperative Patent Classification (CPC):
**C01B 21/086; C01D 15/00; C01D 15/04; H01M 10/0525; H01M 10/0568;** Y02E 60/10

(86) International application number:
**PCT/CN2025/128671**

(87) International publication number:
**WO 2026/113731 (04.06.2026 Gazette 2026/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **28.11.2024 CN 202411729269**

(71) Applicant: **Jiujiang Tinci Materials Technology Co., Ltd.**
**Jiujiang, Jiangxi 332500 (CN)**

(72) Inventors:
- **QIN, Xiaokang**
  **Jiujiang, Jiangxi 332500 (CN)**
- **CAI, Yuanman**
  **Jiujiang, Jiangxi 332500 (CN)**
- **LIU, Du**
  **Jiujiang, Jiangxi 332500 (CN)**

(74) Representative: **IPAZ**
**Parc Les Algorithmes**
**Bâtiment Platon**
**91190 Saint Aubin (FR)**

# (54) LITHIUM FLUORIDE, AND PREPARATION METHOD THEREFOR AND USE THEREOF

(57) The present application provides a lithium fluoride, a preparation method therefor and use thereof, where a mass content of carbonate in the lithium fluoride is less than or equal to 1000 mg/kg; a D10 of the lithium fluoride is less than or equal to 10 μm, a D50 is less than or equal to 20 μm, and a bulk density ranges from 0.9 g/cm$^3$ to 1.2 g/cm$^3$.

EP 4 790 023 A1

## Description

The present application claims the priority to Chinese Patent Application No. 202411729269.3, titled "LITHIUM FLUORIDE, PREPARATION METHOD THEREFOR AND USE THEREOF", filed before the China National Intellectual Property Administration on November 28, 2024, which is incorporated herein by reference in its entirety.

## TECHNICAL FIELD

The present application relates to a lithium fluoride, in particular to a lithium fluoride, a preparation method therefor and use thereof, belonging to the field of lithium-ion batteries.

## BACKGROUND

Lithium fluoride, as an important lithium-based fundamental material, has wide applications in many fields. With the growing demand for lithium fluoride in traditional application fields and the continuous emergence of new application fields, such as optical fiber communication, high-energy chemical power sources, aerospace, etc., the research and preparation of lithium fluoride have become increasingly prominent.

It is particularly important that lithium fluoride is a crucial raw material for electrolyte salts used in lithium-ion batteries, such as lithium hexafluorophosphate and lithium bis(fluorosulfonyl)imide, and its quality has a great influence on the quality of the electrolyte products. Therefore, it is crucial to develop a lithium fluoride that is conducive to improving the quality of electrolyte salts.

## SUMMARY

The present application provides a lithium fluoride, which has specific dimensional specifications and a low content of carbonate impurities. The lithium fluoride is helpful for preparing electrolyte salts capable of improving battery electrochemical performance.

The present application provides a lithium fluoride, where a mass content of carbonate in the lithium fluoride is less than or equal to 1000 mg/kg; and

a D10 of the lithium fluoride is less than or equal to 10 μm, a D50 is less than or equal to 20 μm, and a bulk density ranges from 0.9 g/cm$^3$ to 1.2 g/cm$^3$.

The technical solution of the present application was completed by the inventors based on the following findings: When the inventors used commercially available lithium fluoride as a raw material to prepare battery-grade products, such as hexafluorophosphate salt or bis(fluorosulfonyl)imide salt, it was found that using conventional methods within conventional operation times resulted in difficulties in impurity removal. Furthermore, when such products were applied in an electrolytic solution, precipitation in the electrolytic solution increased. Analysis indicated that the precipitation might be caused by impurities carried over from the hexafluorophosphate salt or bis(fluorosulfonyl)imide salt. Initially, it was thought that the impurities were generated during the production process. Therefore, to reduce the impurity content, improvements were made to the synthesis process of hexafluorophosphate salt or bis(fluorosulfonyl)imide salt. However, it was found that improvements in the process parameters had an insignificant effect on improving this problem. Subsequently, analysis was conducted on the synthesis raw materials. It was discovered that a portion of currently commercially available lithium fluoride products included carbonate impurities, such as lithium carbonate. These carbonate impurities might be carried over because the product was prepared via a technical route using carbonate as the raw material. It was precisely when raw materials including carbonate impurities were used to prepare electrolyte products that difficulties in removing impurities and increased precipitation in the electrolytic solution occurred. The inventors analyzed that the reason might lie in the fact that lithium carbonate can also react with hydrofluoric acid, the raw material for preparing lithium hexafluorophosphate, and with bis(fluorosulfonyl)imide, the raw material for preparing lithium bis(fluorosulfonyl)imide. Moreover, as carbonates are alkaline substances, they are more likely to react with the raw materials to generate water compared to the lithium fluoride. Both lithium hexafluorophosphate and lithium bis(fluorosulfonyl)imide are sensitive to water and hydrolyze to produce impurities.

Due to considerations of production costs and other commercial factors, the lithium fluoride used cannot avoid being prepared from carbonates as raw materials, meaning carbonate is inevitably present in the lithium fluoride product. Under these circumstances, the inventors could only attempt to solve the problem by reducing the content of carbonate. However, it was found that when carbonate was inevitably present, merely reducing the content of carbonate did not adequately solve the problem. Later, the inventors inadvertently discovered that only by simultaneously controlling both the content of carbonate and the particle size of the lithium fluoride could the problems of difficult impurity removal and increased precipitation be solved when the product is applied in the electrolytic solution. The reason is as follows: when the lithium fluoride product has a large particle size and high alkaline substance content, and participates in the reaction as the

raw material, both the substance on the surface of the lithium fluoride particles and lithium carbonate react with the other reaction raw materials. As an alkaline substance, lithium carbonate can react preferentially over the lithium fluoride to produce impurities. Meanwhile, due to the large particle size of the lithium fluoride, it cannot react quickly to completion. Consequently, impurities adhere to the unreacted lithium fluoride, and the subsequently produced product also adheres to it. Eventually, the final product encapsulates both the impurities and the unreacted lithium fluoride inside, leading to products prepared from such lithium fluoride having problems of difficult impurity removal and increased precipitation when applied in the electrolytic solution. Based on this, merely reducing the content of carbonate without controlling the particle size similarly makes it difficult to avoid impurities being encapsulated within the product. However, when the content of carbonate is less than 1000 ppm, and simultaneously the D10 of the lithium fluoride is less than or equal to 10 μm, the D50 is less than or equal to 20 μm, and the bulk density ranges from 0.9 g/cm$^3$ to 1.2 g/cm$^3$, due to the abundance and very small particle size of the lithium fluoride, it forms a competitive reaction relationship with carbonate and rapidly participates in the reaction. As a result, the lithium fluoride with very small particle size is consumed quickly. The product and impurities do not form an encapsulation relationship. Therefore, even if a small amount of impurities is finally generated, removal is easier because the impurity amount is very small and exists independently in the system.

The present application provides a preparation method for a lithium fluoride, including the following steps:

1) mixing lithium carbonate with water and performing a slurrying treatment to form a lithium carbonate slurry having a mass percentage content of lithium carbonate ranging from 10% to 30%; and
2) adding hydrofluoric acid to the lithium carbonate slurry, enabling the system to react at a pH ranging from 3 to 6 until the pH of a reaction system shows no change, to obtain a reaction product, and subjecting the reaction product to a microwave drying treatment to obtain the lithium fluoride;

where a reaction temperature ranges from 10 °C to 70 °C; preferably, the reaction temperature ranges from 30 °C to 60 °C.

Currently, most commercially available lithium fluoride is prepared by carbonating lithium carbonate with carbon dioxide to obtain lithium bicarbonate, followed by fluorinating lithium bicarbonate with hydrofluoric acid or ammonium fluoride to obtain the lithium fluoride. However, this method has problems such as high residual lithium carbonate content. Moreover, the inventors have discovered that when the lithium fluoride product has a large particle size and high lithium carbonate content, and participates in the reaction as the raw material, the lithium carbonate in the lithium fluoride, being alkaline, can react preferentially over the lithium fluoride to produce impurities. Meanwhile, due to the large particle size of the lithium fluoride, it cannot react quickly to completion. Consequently, impurities adhere to the unreacted lithium fluoride, and the subsequently produced product also adheres to it. Eventually, the final product encapsulates both the impurities and the unreacted lithium fluoride inside, leading to electrolyte salts prepared from the lithium fluoride as the raw material being prone to poor stability and precipitation during storage and use. To optimize the purity of the lithium fluoride, the preparation method of the present application innovatively slurries lithium carbonate and then reacts it with hydrofluoric acid to obtain crude lithium fluoride, followed by microwave drying treatment. This not only reduces the content of carbonate in the lithium fluoride but also adjusts the structural dimensions of the lithium fluoride. Consequently, when using the lithium fluoride as the raw material to prepare electrolyte salts, the storage stability and application stability of the electrolyte salts can be significantly improved.

The present application also provides a lithium fluoride prepared by the preparation method for the lithium fluoride according to any of the above, where the mass content of carbonate in the lithium fluoride is less than or equal to 1000 mg/kg; and

the D10 of the lithium fluoride is less than or equal to 10 μm, the D50 is less than or equal to 20 μm, and the bulk density ranges from 0.9 g/cm$^3$ to 1.2 g/cm$^3$.

The present application respectively provides a lithium hexafluorophosphate and a lithium bis(fluorosulfonyl) imide, which are prepared from the aforementioned lithium fluoride, therefore having low impurity content, which are helpful to improve the electrochemical performance of batteries.

## DETAILED DESCRIPTION

In order to make the objectives, technical solutions, and advantages of the present application clearer, the technical solutions in the embodiments of the present application will be described clearly and completely below in combination with the embodiments of the present application. Obviously, the described embodiments are part of the embodiments of the present application, but not all of them. Based on the embodiments in the present application, all other embodiments obtained by a person of ordinary skill in the art fall within the protection scope of the present application.

At the present stage, when the inventors used commercially available lithium fluoride as the raw material to prepare battery-grade lithium salt products, such as hexafluorophosphate salt or bis(fluorosulfonyl)imide salt according to conventional current processes at the present stage, it was found that the lithium salt products had high impurity content, and impurities and lithium salt products were intermixed, making it difficult to achieve efficient impurity removal, and the

recovery rate of lithium salt products was low. Furthermore, when such lithium salt products were applied in the electrolytic solution, precipitation occurred during the storage and application of the electrolytic solution. Based on this, the inventors made some optimizations to the process for preparing lithium salt products, but the effect was insignificant.

Therefore, the inventors attempted to treat commercially available lithium fluoride to improve the performance of lithium salt products by enhancing the quality of lithium fluoride. During the research process, the inventors discovered that lithium fluoride included carbonate impurities, such as lithium carbonate, which might be the main cause of the quality issues with lithium salt products. In detail, carbonate, as an alkaline compound, is more likely to react with hydrofluoric acid, the raw material for preparing lithium hexafluorophosphate, or with bis(fluorosulfonyl)imide, the raw material for preparing lithium bis(fluorosulfonyl)imide, to generate water during the preparation of lithium salt products. Lithium hexafluorophosphate and lithium bis(fluorosulfonyl)imide have extremely poor water stability and are very prone to reacting with water to generate other impurities, which then become intermixed with lithium hexafluorophosphate and lithium bis(fluorosulfonyl)imide.

At the present stage, the technical route of using lithium carbonate as the raw material for preparing lithium fluoride is extremely mature, so the feasibility of changing the raw material to prepare lithium fluoride is low. Therefore, the inventors researched the control of the content of carbonate in the lithium fluoride and achieved preliminary results. However, even after reducing the content of carbonate, the quality of lithium salt products still did not meet expectations.

Later, the inventors discovered that when the dimensional specifications of the lithium fluoride changed simultaneously, the quality of lithium salt products would also change.

Based on the above concept, the present application provides a lithium fluoride, where the mass content of carbonate in the lithium fluoride is less than 1000 mg/kg; the D10 of the lithium fluoride is less than or equal to 10 μm, the D50 is less than or equal to 20 μm, and the bulk density ranges from 0.9 $g/m^3$ to 1.2 $g/m^3$.

By using the lithium fluoride of the present application as the raw material for preparing lithium salt products, it can significantly reduce the impurity content in the lithium salt products, thereby improving the stability of the electrolytic solution and inhibiting precipitation during storage and application. The inventors analyzed the reasons for this, believing that the dimensional specifications of the lithium fluoride also have a significant impact on the reaction process. Different dimensional specifications determine the reaction extent of the lithium fluoride and lithium carbonate with hydrofluoric acid or bis(fluorosulfonyl)imide, etc. If the reaction extent of the lithium fluoride with hydrofluoric acid or bis(fluorosulfonyl)imide is lower than that of carbonate, a large amount of impurities will be generated and the lithium fluoride cannot react completely quickly as the reaction proceeds. Ultimately, impurities and the incompletely reacted lithium fluoride will be intermixed and encapsulated within the lithium salt product, leading to problems such as difficult impurity removal and poor electrolytic solution stability with easy precipitation. However, when the dimensional specifications of the lithium fluoride of the present application satisfy that the D10 is less than or equal to 10 μm, the D50 is less than or equal to 20 μm, the bulk density ranges from 0.9 $g/cm^3$ to 1.2 $g/cm^3$, and the content of carbonate is less than or equal to 1000 mg/kg, the impurity content in the lithium salt products is significantly reduced and the impurities are easier to separate from the lithium fluoride. The reason is that when the lithium fluoride has these dimensional specifications and its content of carbonate is low, it forms a competitive reaction relationship with carbonate. The lithium fluoride rapidly participates in the reaction and is reacted to completion in a relatively short time. Therefore, not only is the impurity content lower, but also the lithium salt product and impurities do not form an encapsulated or intermixed relationship. As a result, even if a small amount of impurities is generated in the system, removal is easier because the impurity amount is very small and exists independently from the lithium salt product.

In one specific embodiment, the purity of the lithium fluoride is greater than 99.8%. When the purity of the lithium fluoride is within the above range, the content of impurities such as carbonate in the lithium fluoride is low, and correspondingly the content of impurities in the lithium salt products prepared from this lithium fluoride is also low. This results in greater improvement in the performance of lithium salt products and more significant enhancement in electrolytic solution stability and battery performance. Further, the purity of the lithium fluoride is greater than 99.9%.

The inventors found that when the particle size of the lithium fluoride meets the above requirements, as the mass content of carbonate in the lithium fluoride decreases within a certain range, the impurity content in lithium salt products shows a decreasing trend. In particular, when the mass content of carbonate in the lithium fluoride is less than or equal to 600 mg/kg, the storage performance of lithium salt products prepared from the lithium fluoride is more excellent.

Furthermore, when the D10 of the lithium fluoride is less than or equal to 7 μm and the D50 is less than or equal to 15 μm, the impurities in the lithium fluoride are also easier to remove, thereby further improving the purity of the lithium fluoride. Exemplarily, the D10 of the lithium fluoride is 0.5 μm, 1 μm, 2 μm, 3 μm, 3.5 μm, 4 μm, 4.6 μm, 5 μm, 6 μm, 6.1 μm, 7 μm, or any range between two of these values; the D50 of the lithium fluoride is 5 μm, 5.7 μm, 6 μm, 7 μm, 8.5 μm, 10 μm, 11.5 μm, 12 μm, 14 μm, 14.3 μm, 15 μm, or any range between two of these values.

Although reducing the mass content of carbonate in the lithium fluoride and reducing the D10 and D50 of the lithium fluoride are beneficial for improving the performance of the lithium fluoride, the inventors found that as the mass content of carbonate in lithium fluoride and the D10 and D50 decrease within a certain range, the impurity content in lithium salt products first shows a decreasing trend and then remains substantially unchanged. Furthermore, further reducing the

mass content of carbonate in the lithium fluoride and the D10 and D50 also leads to an increase in the preparation cost of the lithium fluoride. Therefore, for economic considerations, generally the mass content of carbonate is greater than or equal to 0.1 mg/kg, the D10 of the lithium fluoride is greater than or equal to 1 μm, and the D50 is greater than or equal to 1 μm.

In one specific embodiment, the carbonate in the lithium fluoride includes lithium carbonate.

In one specific embodiment, the lithium fluoride also includes impurities. The impurities include, by mass content: iron ions ≤ 5 ppm, magnesium ions ≤ 8 ppm, calcium ions ≤ 8 ppm, sodium ions ≤ 10 ppm, potassium ions ≤ 10 ppm, aluminum ions ≤ 5 ppm, chloride ions ≤ 10 ppm, and sulfate ions ≤ 10 ppm. When the content of impurity ions in the lithium fluoride is within the above range, the lithium fluoride has higher purity. This ensures that the lithium salt products prepared from this lithium fluoride achieve higher purity and further reduce the probability of other side reactions occurring during subsequent battery applications leading to battery performance degradation.

In one specific embodiment, the mass content of moisture in the lithium fluoride is less than 500 mg/kg. When the moisture content in the lithium fluoride is within the above range, the moisture content in the electrolytic solution can be reduced when the products prepared using this lithium fluoride as reaction raw material are applied in the electrolytic solution, thereby avoiding accelerated decomposition of the electrolytic solution leading to deterioration of the battery's electrochemical performance.

Currently, most commercially available lithium fluoride is prepared by carbonating lithium carbonate with carbon dioxide to obtain lithium bicarbonate, followed by fluorinating lithium bicarbonate with hydrofluoric acid or ammonium fluoride to obtain the lithium fluoride. However, this method has problems such as high residual lithium carbonate content, leading to high lithium carbonate content in commercially available lithium fluoride. Moreover, commercially available lithium fluoride is generally dried using conventional heating methods, resulting in larger particle size of commercially available lithium fluoride, which is not conducive to its subsequent application. Therefore, in order to prepare the lithium fluoride with the aforementioned carbonate content and dimensional specifications, the present application provides a preparation method for the lithium fluoride, including the following steps:

1) mixing lithium carbonate with water and performing a slurrying treatment to form a lithium carbonate slurry having a mass percentage content of lithium carbonate ranging from 10% to 30%; and
2) adding hydrofluoric acid to the lithium carbonate slurry, enabling the system to react at a pH ranging from 3 to 6 until the pH of the reaction system shows no change, to obtain a reaction product, and subjecting the reaction product to a microwave drying treatment to obtain the lithium fluoride;

where the reaction temperature ranges from 10 °C to 70 °C; preferably, the reaction temperature ranges from 30 °C to 60 °C.

Specifically, in step 1), mixing lithium carbonate with water, and then performing the slurrying treatment to mix lithium carbonate and water as uniformly as possible to obtain the lithium carbonate slurry. During the mixing process, by controlling the mass ratio of water to lithium carbonate, such that the mass percentage content of lithium carbonate in the lithium carbonate slurry ranges from 10% to 30%. A mass percentage content lower than 10% can lead to decreased yield, and a mass percentage content higher than 30% can result in uneven slurrying, high residual lithium carbonate in the product, and difficulties in anion removal.

The present application does not limit the specific method used for the slurrying treatment. For example, methods such as stirring treatment or ultrasonic dispersion treatment can be used and selected according to actual needs.

In step 2), slowly adding hydrofluoric acid to the lithium carbonate slurry under stirring to obtain a reaction system, until the reaction system reaches a pH ranging from 3 to 6; and then carrying out the reaction with the reaction temperature ranging from 10 °C to 70 °C, further from 30 °C to 60 °C, until the pH of the reaction system shows no change. Thereby obtaining a reaction solution; subjecting the reaction solution to solid-liquid separation and washing to obtain the reaction product; and subsequently, subjecting the reaction product to the microwave drying treatment to obtain the lithium fluoride.

The present application does not limit the specific method for solid-liquid separation. For example, methods such as filtration or precipitation can be selected.

In the washing treatment of the present application, water can be used as the washing agent. To control the final moisture content of the lithium fluoride, the mass ratio of the washing agent to the solid phase obtained after solid-liquid separation is generally controlled to range from 5:1 to 10:1.

The preparation method of the present application first subjects lithium carbonate to the slurrying treatment with water, which facilitates the uniform reaction of lithium carbonate with hydrofluoric acid solution and avoids excessively violent reactions leading to safety hazards. Meanwhile, it prevents lithium carbonate from being encapsulated into the lithium fluoride product, which would result in excessively high residual lithium carbonate. Moreover, maintaining the pH within the range of 3 to 6 during the reaction process is beneficial for improving reaction efficiency, enabling more lithium carbonate to participate in the reaction to form the lithium fluoride. A pH less than 3 can lead to reduced yield, while a pH greater than 6 can lead to an increased carbonate content in the product. During the reaction, hydrofluoric acid is

continuously consumed, and the pH continuously rises. Therefore, to maintain the pH, hydrofluoric acid needs to be continuously supplemented into the system until the pH no longer changes, indicating that the reaction is complete.

It is worth mentioning that because heat in traditional heating drying is transferred from the outside to the inside, moisture on the outer layer volatilizes first, causing agglomeration and encapsulation. This not only results in high moisture content in the lithium fluoride but also leads to a larger particle size of the dried product. In contrast to traditional heating, heat in microwave drying treatment diffuses from the center outward, allowing moisture to volatilize more thoroughly from the inside out. Moreover, during volatilization, a puffing effect can be produced, yielding a dried product meeting the above dimensional parameters.

Therefore, the preparation method of the present application can prepare the lithium fluoride having the mass content of carbonate less than 1000 mg/kg, the D10 less than 10 μm, the D50 less than 20 μm, and the bulk density ranging from 0.9 g/cm$^3$ to 1.2 g/cm$^3$, which facilitates the subsequent application of the lithium fluoride. Moreover, this method has a simple process, low equipment requirements, and high production efficiency.

It can be understood that the temperature of the slurrying treatment should generally not be too high or too low. If below 0 °C, it is not conducive to the dispersion of lithium carbonate; if the temperature is too high, lithium carbonate may absorb water excessively, increasing water content. Therefore, to further ensure the effect of the slurrying treatment, the aforementioned slurrying treatment is performed at a temperature ranging from 10 °C to 30 °C.

In one specific embodiment, the microwave frequency of the microwave drying treatment ranges from 900 MHz to 1100 MHz, for example, 900 MHz, 920 MHz, 940 MHz, 960 MHz, 980 MHz, 1000 MHz, 1020 MHz, 1040 MHz, 1060 MHz, 1080 MHz, or 1100 MHz, etc., and the microwave treatment time ranges from 1 h to 2 h, for example, 1 h, 1.1 h, 1.2 h, 1.3 h, 1.4 h, 1.5 h, 1.6 h, 1.7 h, 1.8 h, 1.9 h, or 2 h, etc. When the microwave frequency and time for the microwave drying treatment are within the above ranges, the microwave treatment drying can provide sufficient heat to the reaction product, enabling moisture to quickly volatilize from the inside out within the reaction product, producing a greater puffing effect, resulting in a smaller particle size of the dried lithium fluoride, thereby improving the quality of the lithium fluoride to a greater extent.

In one specific embodiment, the hydrofluoric acid is added to the lithium carbonate slurry by a slow dropwise addition, with a dropwise addition time ranging from 0.5 h to 3 h, for example, 0.5 h, 1 h, 1.5 h, 2 h, 2.5 h, or 3 h, etc. When hydrofluoric acid is slowly added dropwise to the lithium carbonate slurry, lithium carbonate can fully react with the hydrofluoric acid solution, ensuring that lithium carbonate is converted to the lithium fluoride, and avoiding overly violent reaction processes causing safety hazards. Meanwhile, it avoids rapid generation of the lithium fluoride, which can cause lithium carbonate to be encapsulated, thereby obtaining the lithium fluoride with high purity and low carbonate content. Furthermore, the dropwise addition time also needs to be determined according to the reaction temperature of step 2). As hydrofluoric acid is added, the system temperature increases. Therefore, by controlling the dropwise addition time, the system temperature can be ensured to range from 10 °C to 70 °C.

In one specific embodiment, the mass percentage content of hydrofluoric acid ranges from 30% to 48%, for example, 30%, 32%, 34%, 36%, 38%, 40%, 42%, 44%, 46%, or 48%, etc. When the mass percentage content of hydrofluoric acid is within the above range, hydrofluoric acid can fully react with lithium carbonate to generate the lithium fluoride, and the reaction rate is suitable, avoiding violent reactions, thereby obtaining the lithium fluoride with high purity and low carbonate content. Moreover, under the condition of ensuring safety, the water content in the system can be minimized as much as possible, effectively inhibiting the generation of impurities in lithium salt products.

In one specific embodiment, the lithium carbonate is high-purity lithium carbonate. The impurities in the high-purity lithium carbonate include, by mass percentage content: iron ions ≤ 8 ppm, magnesium ions ≤ 12 ppm, calcium ions ≤ 11 ppm, sodium ions ≤ 14 ppm, potassium ions ≤ 14 ppm, aluminum ions ≤ 7 ppm, sulfate ions ≤ 80 ppm, and chloride ions ≤ 80 ppm. When high-purity lithium carbonate with the above impurity content is used as the raw material for preparing the lithium fluoride, the impurity content in high-purity lithium carbonate is low, so that the impurity content introduced during the lithium fluoride preparation process is low. This facilitates obtaining high-purity lithium fluoride. Furthermore, it avoids side reactions of impurities during the lithium fluoride preparation process leading to the generation of other by-products, improving the purity of the lithium fluoride to a greater extent.

In one specific embodiment, the slurrying treatment includes the following steps:

dividing the lithium carbonate having a total mass of m into N parts, where the set of N is denoted as S={1, 2, ... , i-1, i, ... , N};

mixing the i-th part of lithium carbonate having a mass of $m_i$ with water having a mass of $M_i$, and performing the slurrying treatment at a stirring speed of $V_i$ until a viscosity is ≤ 2 mPa•s, to obtain an i-th system;

mixing the i-th system and the (i+1)-th part of lithium carbonate having a mass of $m_{i+1}$ with water having a mass of $M_{i+1}$, and performing the slurrying treatment at a stirring speed of $V_{i+1}$ until a viscosity is ≤ 2 mPa•s, to obtain an (i+1)-th system; and

sequentially performing the slurrying treatment until all the lithium carbonate is mixed with all the water to form the lithium carbonate slurry, and ensuring that the mass percentage content of lithium carbonate in each system ranges from 10% to 30%.

Specifically, dividing the lithium carbonate into N parts ($N \geq 2$); controlling the mass ratio of each part of lithium carbonate to the total lithium carbonate ($m_i/m$) ranging from 0 to 1; subsequently, mixing the i-th part of lithium carbonate (having a mass of $m_i$) with water (having a mass of $M_i$), and performing the slurrying treatment at the stirring speed of $V_i$ until the viscosity is ≤ 2 mPa•s, to obtain the i-th system; subsequently, mixing the i-th system and the (i+1)-th part of lithium carbonate (having a mass of $m_{i+1}$), with water (having a mass of $M_{i+1}$), and performing the slurrying treatment at a stirring speed of $V_{i+1}$ until the viscosity is ≤ 2 mPa•s, to obtain the (i+1)-th system; repeating the above operation until the N-th system is obtained; and controlling the ratio $m_i/m_{i+1}$ ranging from 1 to 10, the ratio $M_i/M_{i+1}$ ranging from 1 to 10, and the ratio $V_i/V_{i+1}$ ranging from 0.5 to 2.

The value of N in the present application can be adjusted according to actual situations. For example, N can be selected from 2, 3, 4, 5, or 6, etc.

Once agglomeration of lithium carbonate occurs during the slurrying process, the lithium carbonate inside the agglomerates will be difficult to react with hydrofluoric acid. This results in a phenomenon where the lithium fluoride generated from the reaction of lithium carbonate on the outside of the agglomerates with hydrofluoric acid encapsulates the lithium carbonate. Therefore, to further reduce the lithium carbonate content in the lithium fluoride, the present application uses batchwise slurrying treatment to enable thorough mixing of lithium carbonate and water, avoiding agglomeration, and ultimately achieving the preparation of the lithium fluoride with high purity and low lithium carbonate content.

In one specific embodiment, the slurrying treatment includes the following steps: dividing the lithium carbonate having a total mass of m into three parts, where $1/2 \leq m_1/m < 1$, $0 < m_2/m \leq 1/3$, and $0 < m_3/m \leq 1/6$; mixing a first part of lithium carbonate having a mass of $m_1$ with water having a mass of $M_1$, and performing the slurrying treatment at a stirring speed of $V_1$ until the viscosity is ≤ 1.6 mPa•s, to obtain a first system; mixing the first system and a second part of lithium carbonate having a mass of $m_2$ with water having a mass of $M_2$, and performing the slurrying treatment at a stirring speed of $V_2$ until the viscosity is ≤ 1.6 mPa•s, to obtain a second system; mixing the second system and a third part of lithium carbonate having a mass of $m_3$ with water having a mass of $M_3$, and performing the slurrying treatment at a stirring speed of $V_3$ until the viscosity is ≤ 1.6 mPa•s, to obtain a third system, i.e., the lithium carbonate slurry; where $1 \leq m_1/m_2 \leq 4$, $1 \leq m_2/m_3 \leq 3$, $1 \leq M_1/M_2 \leq 4$, $1 \leq M_2/M_3 \leq 3$, $0.5 \leq V_1/V_2 \leq 1$, and $0.5 \leq V_2/V_3 \leq 1$.

Specifically, dividing the lithium carbonate into three parts with the first part having a mass of $m_1$, the second part having a mass of $m_2$, and the third part having a mass of $m_3$ such that $1/2 \leq m_1/m < 1$, $0 < m_2/m \leq 1/3$, $0 < m_3/m \leq 1/6$, $1 \leq m_1/m_2 \leq 4$, and $1 \leq m_2/m_3 \leq 3$; subsequently, mixing the lithium carbonate of the first part with water having a mass of $M_1$, and performing the slurrying treatment at a stirring speed of $V_1$ until the viscosity is ≤ 1.6 mPa•s, to obtain the first system; mixing the first system and the lithium carbonate of the second part with water having a mass of $M_2$, and performing the slurrying treatment at a stirring speed of $V_2$ until the viscosity is ≤ 1.6 mPa•s, to obtain the second system; mixing the second system and the lithium carbonate of the third part with water having a mass of $M_3$, and performing the slurrying treatment at a stirring speed of $V_3$ until the viscosity is ≤ 1.6 mPa•s, to obtain the third system, i.e., the lithium carbonate slurry; and controlling the parameters such that $1 \leq M_1/M_2 \leq 4$, $1 \leq M_2/M_3 \leq 3$, $0.5 \leq V_1/V_2 \leq 1$, and $0.5 \leq V_2/V_3 \leq 1$.

The present application divides the slurrying treatment into three steps and controls the parameters of the slurrying treatment within the above ranges, which results in a more uniform slurry formed by lithium carbonate, facilitating uniform reaction with the hydrofluoric acid solution, avoiding safety hazards. Moreover, it more effectively prevents lithium carbonate from being encapsulated into the lithium fluoride product, which would result in excessively high residual lithium carbonate, and further improves the purity of the lithium fluoride.

In one specific embodiment, in step 2), after reacting until the pH of the reaction system shows no change, the method further includes the following step: adjusting the pH of the reaction system to range from 7 to 10. When the pH of the reaction does not change, there may still be residual hydrofluoric acid in the reaction system, making the reaction system acidic. The solubility of the lithium fluoride is higher under acidic conditions. Therefore, adjusting the pH of the reaction system to range from 7 to 10 reduces the solubility of the lithium fluoride, thereby improving the yield of the lithium fluoride and avoiding waste of the lithium fluoride.

The present application does not limit the raw materials used to adjust the pH of the reaction system to range from 7 to 10. It can be selected according to actual needs. For example, a lithium hydroxide solution can be selected to avoid introducing other impurity ions.

The present application also provides a lithium fluoride prepared by the above method, where the mass content of carbonate in the lithium fluoride is less than or equal to 1000 mg/kg; the D10 of the lithium fluoride is less than or equal to 10 μm, the D50 is less than or equal to 20 μm, and the bulk density ranges from 0.9 g/cm$^3$ to 1.2 g/cm$^3$.

Using the lithium fluoride as the raw material for preparing lithium salt products can significantly reduce the impurity content in lithium salt products, thereby improving the stability of the electrolytic solution, inhibiting precipitation during storage and application, and facilitating enhanced the cycle performance of lithium-ion batteries.

The present application also provides a lithium hexafluorophosphate, where the lithium hexafluorophosphate is prepared from the raw material system including the aforementioned lithium fluoride. Specifically, the lithium fluoride is used as the raw material to react with phosphorus pentafluoride gas under an inert atmosphere to obtain the lithium

hexafluorophosphate.

In one specific embodiment, the lithium fluoride is mixed with anhydrous hydrofluoric acid, and then the mixed solution is reacted with phosphorus pentafluoride at a temperature ranging from -20 °C to -5 °C to obtain the lithium hexafluorophosphate.

In another specific embodiment, the lithium fluoride is mixed with an organic solvent, and then the mixed solution is subjected to a reflux reaction with phosphorus pentafluoride to obtain the lithium hexafluorophosphate. The organic solvent is, for example, ethylene carbonate, diethyl carbonate, dimethyl carbonate, etc.

Because the lithium fluoride has special dimensional specifications and low carbonate content, the lithium fluoride can rapidly participate in the reaction to form the lithium hexafluorophosphate, not only improving the purity of the lithium hexafluorophosphate but also reducing the difficulty of separating the lithium hexafluorophosphate from impurities. Applying the lithium hexafluorophosphate to the electrolytic solution results in higher storage stability of the electrolytic solution and also ensures high electrochemical performance of the battery.

The present application also provides a lithium bis(fluorosulfonyl)imide, where the lithium bis(fluorosulfonyl)imide is prepared from the raw material system including the aforementioned lithium fluoride. Specifically, the lithium fluoride is used as the raw material under an inert atmosphere to obtain the lithium bis(fluorosulfonyl)imide in the absence of a solvent.

In one specific embodiment, the lithium fluoride is mixed with bis(fluorosulfonyl)imide and reacts at a temperature ranging from 100 °C to 140 °C to obtain the lithium bis(fluorosulfonyl)imide.

Similarly, because the lithium fluoride has special dimensional specifications and low carbonate content, the lithium bis(fluorosulfonyl)imide of the present application also has higher quality. Applying this lithium bis(fluorosulfonyl)imide to the electrolytic solution results in higher storage stability of the electrolytic solution and also ensures excellent cycle performance of the battery.

The following provides a further detailed description of the present application through specific examples.

Example 1

The method for preparing the lithium fluoride provided in this example includes the following steps:

1) at 30 °C, lithium carbonate was mixed with water and subjected to the slurrying treatment to form a lithium carbonate slurry having a mass percentage content of lithium carbonate of 20%; the impurity composition of the lithium carbonate is shown in Table 1A;
2) a hydrofluoric acid solution with a mass percentage content of 48% was added to the lithium carbonate slurry, with a dropwise addition time of 2 h, and the system was allowed to react under conditions of pH 5 and temperature T of 70 °C. When the pH no longer changed, the reaction product was subjected to the microwave drying treatment to obtain the lithium fluoride; where the microwave drying treatment had a frequency of 1000 MHz and a time of 1.5 h.

Table 1A

| | Iron Ions | Magnesium Ions | Calcium Ions | Sodium Ions | Potassium Ions | Aluminum Ions | Chloride Ions | Sulfate Ions |
|---|---|---|---|---|---|---|---|---|
| Content | 2 ppm | 5 ppm | 3 ppm | 5 ppm | 2 ppm | 4 ppm | 35 ppm | 28 ppm |

Example 2

The method for preparing the lithium fluoride provided in this example includes the following steps:

1) at 20 °C, lithium carbonate was mixed with water and subjected to the slurrying treatment to form a lithium carbonate slurry having a mass percentage content of lithium carbonate of 10%; the impurity composition of the lithium carbonate is shown in Table 1A;
2) a hydrofluoric acid solution with a mass percentage content of 48% was added to the lithium carbonate slurry, with a dropwise addition time of 3 h, and the system was allowed to react under conditions of pH 3 and temperature T of 10 °C. When the pH no longer changed, the reaction product was subjected to the microwave drying treatment to obtain the lithium fluoride; where the microwave drying treatment had a frequency of 900 MHz and a time of 1.5 h.

Example 3

1) at 26 °C, lithium carbonate was mixed with water and subjected to the slurrying treatment to form a lithium carbonate slurry having a mass percentage content of lithium carbonate of 30%; the impurity composition of the lithium carbonate is shown in Table 1A;
2) a hydrofluoric acid solution with a mass percentage content of 40% was added to the lithium carbonate slurry, with a dropwise addition time of 1 h, and the system was allowed to react under conditions of pH 4 and temperature T of 40 °C. When the pH no longer changed, the reaction product was subjected to the microwave drying treatment to obtain the lithium fluoride; where the microwave drying treatment had a frequency of 1100 MHz and a time of 2 h.

Example 4

1) at 10 °C, lithium carbonate was mixed with water and subjected to the slurrying treatment to form a lithium carbonate slurry having a mass percentage content of lithium carbonate of 30%; the impurity composition of the lithium carbonate is shown in Table 1A;
2) a hydrofluoric acid solution with a mass percentage content of 48% was added to the lithium carbonate slurry, with a dropwise addition time of 0.5 h, and the system was allowed to react under conditions of pH 6 and temperature T of 30 °C. When the pH no longer changed, the reaction product was subjected to the microwave drying treatment to obtain the lithium fluoride; where the microwave drying treatment had a frequency of 900 MHz and a time of 2 h.

Example 5

The preparation method of this example is substantially the same as that of Example 1, with the difference that the impurity composition of the lithium carbonate in this example is shown in Table 1B.

Table 1B

| | Iron Ions | Magnesium Ions | Calcium Ions | Sodium Ions | Potassium Ions | Aluminum Ions | Chloride Ions | Sulfate Ions |
|---|---|---|---|---|---|---|---|---|
| Content | 5 ppm | 6 ppm | 6 ppm | 8 ppm | 8 ppm | 3 ppm | 25 ppm | 40 ppm |

Example 6

The preparation method of this example is substantially the same as that of Example 1, with the difference that the impurity composition of the lithium carbonate in this example is shown in Table 1C.

Table 1C

| | Iron Ions | Magnesium Ions | Calcium Ions | Sodium Ions | Potassium Ions | Aluminum Ions | Chloride Ions | Sulfate Ions |
|---|---|---|---|---|---|---|---|---|
| Content | 4 ppm | 8 ppm | 2 ppm | 3 ppm | 10 ppm | 6 ppm | 60 ppm | 16 ppm |

Example 7

The preparation method of this example is substantially the same as that of Example 1, with the difference that the impurity composition of the lithium carbonate in this example is shown in Table 1D.

Table 1D

| | Iron Ions | Magnesium Ions | Calcium Ions | Sodium Ions | Potassium Ions | Aluminum Ions | Chloride Ions | Sulfate Ions |
|---|---|---|---|---|---|---|---|---|
| Content | 6 ppm | 10 ppm | 7 ppm | 12 ppm | 9 ppm | 3 ppm | 14 ppm | 34 ppm |

Example 8

The preparation method of this example is substantially the same as that of Example 1, with the difference that the impurity composition of the lithium carbonate in this example is shown in Table 1E.

Table 1E

| | Iron Ions | Magnesium Ions | Calcium Ions | Sodium Ions | Potassium Ions | Aluminum Ions | Chloride Ions | Sulfate Ions |
|---|---|---|---|---|---|---|---|---|
| Content | 8 ppm | 12 ppm | 11 ppm | 14 ppm | 14 ppm | 7 ppm | 80 ppm | 80 ppm |

Example 9

The preparation method of this example is substantially the same as that of Example 1, with the difference that the impurity composition of the lithium carbonate in this example is shown in Table 1F.

Table 1F

| | Iron Ions | Magnesium Ions | Calcium Ion | Sodium Ions | Potassium Ions | Aluminum Ions | Chloride Ions | Sulfate Ions |
|---|---|---|---|---|---|---|---|---|
| Content | 10ppm | 15ppm | 12ppm | 15ppm | 15ppm | 10ppm | 90ppm | 90ppm |

Example 10

The preparation method of this example is substantially the same as that of Example 1, with the difference that the reaction temperature in this example is 60 °C.

Example 11

The preparation method of this example is substantially the same as that of Example 1, with the difference that the frequency of the microwave drying in this example is 700 MHz.

Example 12

The preparation method of this example is substantially the same as that of Example 1, with the difference that the temperature of the slurrying treatment in this example is 5 °C.

Examples 13-22

The methods for preparing the lithium fluoride provided in Examples 13-22 are substantially the same as that of Example 1, with the difference that step 1) is a batchwise slurrying treatment. Step 1) includes the following steps:

1) the lithium carbonate of Example 1 having a total mass of m was divided into three parts, where the mass of the first part of lithium carbonate was $m_1$, the mass of the second part of lithium carbonate was $m_2$, and the mass of the third part of lithium carbonate was $m_3$;

the first part of lithium carbonate was mixed with water having a mass of $M_1$, and the slurrying treatment was performed at a stirring speed of $V_1$ until the viscosity was $\mu_1$ (mPa•s), to obtain the first system;
the first system and the second part of lithium carbonate were mixed with water having a mass of $M_2$, and the slurrying treatment was performed at a stirring speed of $V_2$ until the viscosity was $\mu_2$ (mPa•s), to obtain the second system;
the second system and the third part of lithium carbonate were mixed with water having a mass of $M_3$, and the slurrying treatment was performed at a stirring speed of $V_3$ until the viscosity was $\mu_3$ (mPa•s), to obtain the lithium carbonate slurry.

Specific parameters are shown in Table 2.

Table 2

| | $m_1/m$ | $M_2/M$ | $m_3/m$ | $m_1/m_2$ | $m_2/m_3$ | $M_1/M_2$ | $M_2/M_3$ | $V_1/V_2$ | $V_2/V_3$ | $\mu_1$ | $\mu_2$ | $\mu_3$ |
|---|---|---|---|---|---|---|---|---|---|---|---|---|
| Example 13 | 1/2 | 1/3 | 1/6 | 1.5 | 2 | 3.33 | 3 | 0.83 | 0.86 | 1.6 | 1.6 | 1.6 |
| Example 14 | 2/3 | 1/6 | 1/6 | 4 | 1 | 5.5 | 2 | 0.75 | 0.8 | 2 | 2 | 2 |
| Example 15 | 5/9 | 1/3 | 1/9 | 1.67 | 3 | 3.33 | 3 | 0.83 | 0.86 | 1.6 | 1.6 | 1.6 |
| Example 16 | 1/3 | 1/3 | 1/3 | 1 | 1 | 3.33 | 3 | 0.83 | 0.86 | 1.6 | 1.6 | 1.6 |
| Example 17 | 1/2 | 1/3 | 1/6 | 1.5 | 2 | 1 | 3 | 0.83 | 0.86 | 1.6 | 1.6 | 1.6 |
| Example 18 | 1/2 | 1/3 | 1/6 | 1.5 | 2 | 4 | 3 | 0.83 | 0.86 | 1.6 | 1.6 | 1.6 |
| Example 19 | 1/2 | 1/3 | 1/6 | 1.5 | 2 | 3.33 | 1 | 0.83 | 0.86 | 1.6 | 1.6 | 1.6 |
| Example 20 | 1/2 | 1/3 | 1/6 | 1.5 | 2 | 3.33 | 3 | 0.5 | 0.5 | 1.6 | 1.6 | 1.6 |
| Example 21 | 1/2 | 1/3 | 1/6 | 1.5 | 2 | 3.33 | 3 | 1 | 1 | 1.6 | 1.6 | 1.6 |
| Example 22 | 1/2 | 1/3 | 1/6 | 1.5 | 2 | 3.33 | 3 | 2 | 2 | 1.6 | 1.6 | 1.6 |

Comparative Example 1

The preparation method of Comparative Example 1 is substantially the same as that of Example 1, with the difference that the slurrying treatment of step 1) is not performed in this comparative example.

Comparative Example 2

The preparation method of Comparative Example 2 is substantially the same as that of Example 1, with the difference that the mass percentage content of the lithium carbonate slurry in the slurrying treatment of step 1) in this comparative example is 40%.

Comparative Example 3

The preparation method of Comparative Example 3 is substantially the same as that of Example 1, with the difference that the reaction temperature in step 2) of this comparative example is 100 °C.

Comparative Example 4

The preparation method of Comparative Example 4 is substantially the same as that of Example 1, with the difference that step 2) in this comparative example is performed under a condition of pH 7.

Comparative Example 5

The preparation method of Comparative Example 5 is substantially the same as that of Example 1, with the difference that the reaction temperature in step 2) of this comparative example is 0 °C.

Comparative Example 6

The preparation method of Comparative Example 6 is substantially the same as that of Example 1, with the difference that in step 2) of this comparative example, the reaction product is not subjected to the microwave drying but to a drying treatment by using an ordinary oven, with a drying temperature of 105 °C and a drying time of 6 h.

Test Example 1

The purity, impurity content, particle size, and bulk density of the lithium fluoride from the Examples and Comparative Examples were tested, and the results are shown in Table 2A and Table 2B.

Among them, the lithium carbonate content was detected by acid-base titration; anions such as sulfate ions and chloride ions were detected by ion chromatography; cations such as iron ions, magnesium ions, calcium ions, sodium ions, potassium ions, and aluminum ions were detected using ICP-OES inductively coupled plasma optical emission spectrometry; the mass content of moisture was detected by the drying method; the purity of the lithium fluoride was obtained by

the following formula: Purity = 100% - Lithium carbonate content - Anion impurity content - Cation impurity content - Moisture mass content; the particle size was detected by a particle size analyzer; the bulk density was detected by referring to GB/T 3603.

Table 2A

| | Purity | Lithium Carbonate Content | Iron Ions | Magnesium Ions | Calcium Ions | Sodium Ions | Potassium Ions | Aluminum Ions | Chloride Ions | Sulfate Ions |
|---|---|---|---|---|---|---|---|---|---|---|
| | % | mg/Kg | ppm | | | | | | | |
| Example 1 | 99.94 | 284 | 1.4 | 3.5 | 2.1 | 3.5 | 1.4 | 2.8 | 3.5 | 2.8 |
| Example 2 | 99.93 | 290 | 2.0 | 3.7 | 2.3 | 3.7 | 1.5 | 3.0 | 3.6 | 3.0 |
| Example 3 | 99.95 | 230 | 1.3 | 3.2 | 1.9 | 3.2 | 1.3 | 2.5 | 3.2 | 2.5 |
| Example 4 | 99.95 | 230 | 1.2 | 3.0 | 1.8 | 3.0 | 1.2 | 2.4 | 3.15 | 2.52 |
| Example 5 | 99.93 | 240 | 3.5 | 4.2 | 4.2 | 5.6 | 5.6 | 2.1 | 2.5 | 4.0 |
| Example 6 | 99.94 | 280 | 2.8 | 5.6 | 1.4 | 2.1 | 7.0 | 4.2 | 6.0 | 1.6 |
| Example 7 | 99.93 | 325 | 4.2 | 7.0 | 4.9 | 8.4 | 6.3 | 2.1 | 1.4 | 3.4 |
| Example 8 | 99.94 | 284 | 4.8 | 7.2 | 6.6 | 8.4 | 8.4 | 4.2 | 8.0 | 8.0 |
| Example 9 | 99.93 | 300 | 4.7 | 8.0 | 8.0 | 9.3 | 8.8 | 5.0 | 9.2 | 19.7 |
| Example 10 | 99.95 | 278 | 1.2 | 2.8 | 1.5 | 3.0 | 1.1 | 2.1 | 2.8 | 2.3 |
| Example 11 | 99.89 | 391 | 1.9 | 4.2 | 2.8 | 4.0 | 2.4 | 3.6 | 4.6 | 3.9 |
| Example 12 | 99.90 | 389 | 1.6 | 3.9 | 2.6 | 3.6 | 1.9 | 3.0 | 4.1 | 3.2 |
| Example 13 | 99.96 | 79 | 1.2 | 3.4 | 1.9 | 3.1 | 1.2 | 2.6 | 3.3 | 2.5 |
| Example 14 | 99.94 | 177 | 1.2 | 3.4 | 2.0 | 3.3 | 1.4 | 2.7 | 3.5 | 2.6 |
| Example 15 | 99.96 | 86 | 1.3 | 2.8 | 2.1 | 2.9 | 1.3 | 2.7 | 3.4 | 2.3 |
| Example 16 | 99.95 | 169 | 1.3 | 3.4 | 2.0 | 3.4 | 1.3 | 2.7 | 3.4 | 2.7 |
| Example 17 | 99.95 | 120.2 | 1.3 | 3.4 | 2.1 | 3.3 | 1.3 | 2.7 | 3.4 | 2.7 |
| Example 18 | 99.96 | 80 | 1.1 | 3.3 | 1.8 | 3.0 | 1.3 | 2.5 | 3.2 | 2.6 |
| Example 19 | 99.95 | 147.5 | 1.1 | 3.2 | 1.7 | 2.9 | 1.2 | 2.5 | 3.1 | 2.7 |
| Example 20 | 99.96 | 85 | 1.2 | 3.5 | 2.0 | 3.2 | 1.3 | 2.6 | 3.3 | 2.4 |
| Example 21 | 99.96 | 98 | 1.2 | 3.4 | 2.0 | 3.1 | 1.3 | 2.7 | 3.4 | 2.5 |
| Example 22 | 99.95 | 150 | 1.3 | 3.4 | 2.1 | 3.3 | 1.3 | 2.7 | 3.5 | 2.8 |
| Comparative Example 1 | 97.34 | 25320 | 1.9 | 2.3 | 3.2 | 3.5 | 1.6 | 4.1 | 16.5 | 24.4 |
| Comparative Example 2 | 98.47 | 14610 | 2.1 | 2.1 | 3.1 | 3.2 | 1.4 | 4.1 | 13.5 | 14.4 |

(continued)

| | Purity | Lithium Carbonate Content | Iron Ions | Magnesium Ions | Calcium Ions | Sodium Ions | Potassium Ions | Aluminum Ions | Chloride Ions | Sulfate Ions |
|---|---|---|---|---|---|---|---|---|---|---|
| | % | mg/Kg | ppm | | | | | | | |
| Comparative Example 3 | 99.44 | 4690 | 3.4 | 8.5 | 5.1 | 8.5 | 3.4 | 6.8 | 7.0 | 5.04 |
| Comparative Example 4 | 99.63 | 3250 | 1.6 | 4.6 | 3.5 | 4.3 | 3.2 | 5.9 | 8.5 | 9.3 |
| Comparative Example 5 | 99.86 | 404 | 5.5 | 7.3 | 9.2 | 7.5 | 8.5 | 4.8 | 3.8 | 5.8 |
| Comparative Example 6 | 99.92 | 285 | 1.4 | 3.4 | 2.1 | 3.5 | 1.4 | 2.9 | 3.5 | 2.8 |

Table 2B

| | D10/μm | D50/μm | Bulk Density/ g/cm$^3$ | Moisture Mass Content / mg/kg |
|---|---|---|---|---|
| Example 1 | 5.243 | 11.672 | 1.187 | 300 |
| Example 2 | 3.163 | 10.674 | 1.158 | 320 |
| Example 3 | 4.221 | 12.095 | 1.168 | 310 |
| Example 4 | 4.141 | 12.042 | 1.144 | 290 |
| Example 5 | 6.521 | 12.343 | 0.987 | 410 |
| Example 6 | 4.294 | 12.351 | 1.146 | 280 |
| Example 7 | 6.113 | 14.671 | 1.068 | 300 |
| Example 8 | 4.594 | 12.921 | 1.174 | 480 |
| Example 9 | 4.664 | 11.964 | 1.169 | 300 |
| Example 10 | 4.356 | 9.296 | 1.069 | 240 |
| Example 11 | 8.436 | 16.594 | 1.186 | 522 |
| Example 12 | 7.398 | 14.954 | 1.167 | 517 |
| Example 13 | 4.968 | 10.062 | 1.096 | 290 |
| Example 14 | 5.022 | 10.268 | 1.113 | 306 |
| Example 15 | 4.897 | 10.053 | 1.089 | 295 |
| Example 16 | 4.997 | 11.421 | 1.112 | 295 |
| Example 17 | 4.996 | 10.122 | 1.102 | 291 |
| Example 18 | 4.995 | 10.121 | 1.103 | 295 |
| Example 19 | 4.998 | 10.123 | 1.101 | 296 |
| Example 20 | 4.967 | 10.063 | 1.098 | 291 |
| Example 21 | 4.966 | 10.065 | 1.101 | 292 |
| Example 22 | 4.969 | 10.102 | 1.113 | 305 |
| Comparative Example 1 | 12.121 | 23.440 | 0.864 | 1220 |
| Comparative Example 2 | 9.278 | 18.672 | 0.987 | 600 |
| Comparative Example 3 | 11.211 | 22.095 | 0.883 | 890 |
| Comparative Example 4 | 7.221 | 14.322 | 1.217 | 360 |
| Comparative Example 5 | 11.231 | 25.218 | 0.865 | 985 |
| Comparative Example 6 | 14.342 | 35.653 | 0.753 | 1600 |

Test Example 2

The lithium fluoride prepared from Examples 1-4, 10-22 and Comparative Examples 1-6 was used to prepare the lithium hexafluorophosphate, including the following steps:

Under a nitrogen atmosphere, the lithium fluoride was mixed with ethylene carbonate solvent, and then the mixed solution was reacted with phosphorus pentafluoride at -20 °C for 30 minutes to obtain an ethylene carbonate solution of lithium hexafluorophosphate, which was concentrated to a suitable concentration for later use. The molar ratio of the lithium fluoride to phosphorus pentafluoride was 1:1. The acidity and insoluble matter of the lithium hexafluorophosphate product were tested according to the method of Q/TC 049-2023 lithium hexafluorophosphate concentrate. The test results are shown in Table 3A below.

The above ethylene carbonate solution of lithium hexafluorophosphate was applied to the electrolytic solution. The preparation method for the electrolytic solution included the following steps: in an argon-filled glove box ($H_2O$ < 0.1 ppm, $O_2$ < 0.1 ppm), PC/DEC/PP were mixed uniformly in a mass ratio of 20/40/30 and then mixed with the ethylene carbonate solution of lithium hexafluorophosphate, stirred uniformly to form an electrolytic solution with an EC/PC/-DEC/PP mass ratio of 10/20/40/30 and a lithium hexafluorophosphate mass content of 14% based on the total mass. The

storage stability of the electrolytic solution at 25 °C (acidity and chromaticity tested on days 0, 7, 15, and 30) was tested according to the method of Q/TC 060-2024 electrolytic solution for lithium-ion batteries. The results are shown in Table 3B.

Acidity test method: Utilizing the principle of acid-base neutralization titration, the titration endpoint was determined by indicator color change to achieve the measurement purpose. 50 mL of acetone reagent was added to a beaker, followed by 3-5 drops of bromophenol blue ethanol indicator and a magneton. The stirring speed was set to 500 rpm (the solution appeared slightly yellow or colorless at this point). 5-8 g of sample was added by subtraction weighing. The mixture was quickly titrated with 0.01 mol/L triethylamine/EMC standard solution using an electronic titrator until the solution gradually turned yellow, and then was further titrated until local blue color appeared. The titration speed was then reduced, and the titration was continued slowly until the entire solution turned blue. This color was maintained for 3-5s without fading, which was recorded as the titration endpoint. The volume of the standard solution of triethylamine/EMC consumed was recorded to two decimal places (in milliliters). The disposable syringe was weighed, and the sample weight was calculated. The free acid w of the sample, expressed in ppm, was calculated by the formula:

$$w = \frac{V \times c \times M}{m \times 10^{-3}}$$

In the formula:

V - the value of the volume of the triethylamine/EMC standard titration solution consumed by the titration test solution, in milliliters (mL);
c - the accurate value of the concentration of the triethylamine/EMC standard titration solution, in moles per liter (mol/L);
m - the value of the mass of the sample, in grams (g);
*M* - the value of the molar mass of hydrofluoric acid (HF), in grams per mole (g/mol) (M=20.01).

The test result was taken as the average of two parallel samples, and the result was rounded to 0.1 mg/kg. The ratio of the absolute difference between the results of the two parallel determinations to the arithmetic mean value did not exceed 20%.

Insoluble matter detection method: A weighing bottle and a filter membrane that had been dried to constant mass at 105 °C ± 2 °C were taken. The mass of the filter membrane was accurately weighed as $m_1$, with the mass precision recorded to 0.0001 g. An appropriate amount of sample was weighed by subtraction weighing, precise to 0.01 g, and placed in a 500 mL beaker. The sample was filtered by suction using a membrane filtration device. The beaker was washed three times with 100 mL of a benign solvent, and the filtration device was washed five times.

The filter membrane was carefully removed and placed in the weighing bottle, which was then transferred to an air blast drying oven for drying. After the sample had been dried for 2 hours, it was removed and placed in a desiccator to cool to room temperature. The mass of the dried filter membrane was then weighed and recorded as $m_2$.

The insoluble matter content was expressed as a mass fraction w, with the value expressed in mg/kg, calculated by the following formula:

$$w = \frac{m_2 - m_1}{m} \times 10^6$$

In the formula:

$m_1$ - the mass of the filter membrane before filtration, in g;
$m_2$ - the mass of the filter membrane after filtration and drying, in g;
m - the mass of the sample, in g.

The arithmetic mean of the parallel determination results was taken as the test result, and the absolute difference between the two parallel results and the arithmetic mean did not exceed 20%.

Colorimetric detection method: The liquid colorimeter utilized a halogen lamp as the light source, with a grating controlled by a microprocessor program. The color test wavelength ranged from 380 nm to 720 nm, with a wavelength step of 10 nm/step. After the device was switched to the required range, the specified light rays were respectively shone onto test tubes including the sample to be analyzed and colorless distilled water. After passing through the liquid, different

absorption values were generated, and the chromaticity value was calculated by the microprocessor.

Table 3A

| | Lithium Hexafluorophosphate Indicators | |
|---|---|---|
| | Acidity /ppm | Insoluble Matter / ppm |
| Example 1 | 20.0 | 130 |
| Example 2 | 21.3 | 135 |
| Example 3 | 20.7 | 124 |
| Example 4 | 19.3 | 123 |
| Example 10 | 15.7 | 116 |
| Example 11 | 20.0 | 186 |
| Example 12 | 20.7 | 190 |
| Example 13 | 10.5 | 128 |
| Example 14 | 12.1 | 129 |
| Example 15 | 10.9 | 129 |
| Example 16 | 16.7 | 129 |
| Example 17 | 10.6 | 129 |
| Example 18 | 10.9 | 128 |
| Example 19 | 11.2 | 130 |
| Example 20 | 10.6 | 128 |
| Example 21 | 10.5 | 129 |
| Example 22 | 16.0 | 129 |
| Comparative Example 1 | 81.3 | 240 |
| Comparative Example 2 | 40.0 | 291 |
| Comparative Example 3 | 59.3 | 226 |
| Comparative Example 4 | 24.0 | 246 |
| Comparative Example 5 | 65.7 | 258 |
| Comparative Example 6 | 102.4 | 544 |

Table 3B

| | 0d | | 7d | | 15d | | 30d | |
|---|---|---|---|---|---|---|---|---|
| | Acidity /ppm | Chromaticity /Hazen | Acidity /ppm | Chromaticity /Hazen | Acidity /ppm | Chromaticity /Hazen | Acidity /ppm | Chromaticity /Hazen |
| Example 1 | 11.5 | 3 | 12.4 | 4 | 14.2 | 7 | 16.8 | 8 |
| Example 2 | 11.7 | 4 | 12.9 | 5 | 14.0 | 7 | 16.5 | 7 |
| Example 3 | 11.4 | 3 | 12.5 | 5 | 14.1 | 7 | 16.7 | 8 |
| Example 4 | 11.8 | 4 | 13.0 | 5 | 14.6 | 7 | 17.2 | 8 |
| Example 10 | 10.5 | 3 | 11.6 | 4 | 13.0 | 6 | 15.3 | 7 |
| Example 11 | 12.3 | 4 | 13.5 | 5 | 15.2 | 6 | 18.0 | 8 |
| Example 12 | 12.6 | 4 | 13.9 | 6 | 15.6 | 7 | 18.4 | 8 |
| Example 13 | 9.2 | 2 | 10.3 | 3 | 12.4 | 5 | 14.5 | 6 |
| Example 14 | 10.1 | 2 | 12.3 | 3 | 13.9 | 5 | 15.7 | 6 |

(continued)

| | 0d | | 7d | | 15d | | 30d | |
|---|---|---|---|---|---|---|---|---|
| | Acidity /ppm | Chromaticity /Hazen | Acidity /ppm | Chromaticity /Hazen | Acidity /ppm | Chromaticity /Hazen | Acidity /ppm | Chromaticity /Hazen |
| Example 15 | 9.4 | 2 | 10.5 | 3 | 12.5 | 5 | 14.6 | 6 |
| Example 16 | 10.6 | 2 | 11.7 | 3 | 13.5 | 6 | 15.8 | 7 |
| Example 17 | 9.3 | 2 | 10.4 | 3 | 12.5 | 5 | 14.4 | 6 |
| Example 18 | 9.5 | 2 | 10.3 | 3 | 12.3 | 5 | 14.6 | 6 |
| Example 19 | 9.4 | 2 | 10.5 | 3 | 12.4 | 5 | 14.5 | 6 |
| Example 20 | 9.3 | 2 | 10.7 | 3 | 12.6 | 5 | 14.5 | 6 |
| Example 21 | 9.5 | 2 | 10.6 | 3 | 12.5 | 5 | 14.6 | 6 |
| Example 22 | 10.1 | 2 | 11.5 | 3 | 13.2 | 6 | 15.5 | 7 |
| Comparative Example 1 | 35.6 | 6 | 47 | 9 | 68.6 | 15 | 113.6 | 20 |
| Comparative Example 2 | 25.4 | 5 | 30.7 | 8 | 41.4 | 12 | 63.7 | 18 |
| Comparative Example 3 | 30.5 | 5 | 36.9 | 9 | 49.7 | 11 | 76.5 | 16 |
| Comparative Example 4 | 16.6 | 6 | 20.5 | 12 | 25.8 | 15 | 30.6 | 20 |
| Comparative Example 5 | 32.2 | 6 | 39.0 | 9 | 52.5 | 13 | 80.7 | 16 |
| Comparative Example 6 | 48.5 | 15 | 54.2 | 19 | 67.5 | 26 | 100.2 | 35 |

Test Example 3

The lithium fluoride prepared from Examples 1-4, 10-22 and Comparative Examples 1-6 was used to prepare the lithium bis(fluorosulfonyl)imide, including the following steps:

Under a nitrogen atmosphere, bis(fluorosulfonyl)imide was reacted with the lithium fluoride at a molar ratio of 1:1 at 120 °C. After 12 hours, the reaction solution was subjected to devolatilization treatment. The devolatilization treatment was performed under a vacuum degree of 0.5 kPa, at a temperature of 60 °C, for a duration of 48 hours, to obtain the lithium bis(fluorosulfonyl)imide. The lithium bis(fluorosulfonyl)imide prepared above was tested according to the method of Q/TC 054-2023 for high-purity lithium bis(fluorosulfonyl)imide. Its chromaticity, moisture, acidity, and anion impurities were tested, and the results are shown in Table 4A.

The obtained lithium bis(fluorosulfonyl)imide was applied to the electrolytic solution. The preparation method for the electrolytic solution included the following steps: in an argon-filled glove box ($H_2O$ < 0.1 ppm, $O_2$ < 0.1 ppm), EC/PC/DEC/PP were mixed uniformly in a mass ratio of 10/20/40/30. Then, thoroughly dried lithium bis(fluorosulfonyl) imide, accounting for 14% of the total electrolytic solution mass, was quickly added, and the mixture was stirred uniformly to obtain a lithium bis(fluorosulfonyl)imide electrolytic solution. The storage stability of the electrolytic solution at 25 °C (acidity and chromaticity tested on days 0, 7, 15, and 30) was tested according to the method of Q/TC 060-2024 for electrolytic solution for lithium-ion batteries. The results are shown in Table 4B.

Among these, the test methods for chromaticity and acidity are the same as in Test Example 2. The tests for moisture and anion impurities are as follows:

Moisture detection method: A Karl Fischer moisture titrator was used for testing. Any moisture present in the sample (free water or crystal water) underwent a quantitative reaction with Karl Fischer reagent of known titer (a solution composed of iodine, sulfur dioxide, pyridine, and methanol). Approximately 1 g of sample was weighed by subtraction weighing, precise to 0.001 g. After the instrument drift value dropped to the set value, the "COND" light on the panel illuminated, indicating the instrument had stabilized and the titration cell had reached the required dryness for measurement. The "START" key was pressed to begin, and the sample was quickly injected. The sample amount was entered, "ENTER" was pressed to confirm, and the instrument began the sample measurement process. After sample measurement was complete, the

instrument automatically stopped, and the result was recorded; the instrument automatically read the result for calculation. The arithmetic mean of the parallel determination results was taken as the test result, and the ratio of the absolute difference between the two parallel determination results to the arithmetic mean value did not exceed 20%.

Anion impurity detection method: An ion chromatograph was used for testing. The sample was diluted to a certain concentration. Using ion resin as the stationary phase and eluent as the mobile phase, ions such as chloride ions and sulfates in the test solution were separated based on differences in affinity for the stationary phase. A conductivity detector converted the chemical signals of the measured components into electrical signals. Quantitative analysis was performed using the standard curve method or single-point external standard method.

Table 4A

| | Chromaticity /Hazen | Moisture /ppm | Acidity /ppm | Fluoride Ion /ppm | Fluoro Sulfonate /ppm | Sulfamate /ppm |
|---|---|---|---|---|---|---|
| Example 1 | 25 | 15.2 | 25 | 80 | 372.2 | 150 |
| Example 2 | 25 | 15.6 | 26.14 | 52.7 | 357.8 | 156.9 |
| Example 3 | 25 | 14.8 | 23.26 | 65.9 | 352.9 | 139.6 |
| Example 4 | 30 | 14.6 | 22.36 | 65.7 | 309.6 | 134.2 |
| Example 10 | 20 | 14.9 | 22.06 | 67.3 | 365.4 | 132.3 |
| Example 11 | 35 | 19.4 | 39.32 | 72.5 | 629.2 | 235.9 |
| Example 12 | 35 | 18.0 | 39.02 | 90.5 | 624.3 | 234.1 |
| Example 13 | 20 | 12.4 | 22.35 | 61.5 | 302.2 | 136.1 |
| Example 14 | 20 | 12.6 | 23.09 | 71.2 | 357.8 | 144.5 |
| Example 15 | 20 | 12.7 | 22.54 | 62.4 | 310.4 | 138.5 |
| Example 16 | 20 | 14.6 | 24.3 | 72.4 | 350.5 | 142.3 |
| Example 17 | 20 | 12.4 | 22.35 | 62.2 | 303.5 | 135.9 |
| Example 18 | 20 | 12.6 | 22.36 | 62.4 | 304.1 | 136.6 |
| Example 19 | 20 | 12.5 | 22.35 | 61.9 | 305.2 | 137.4 |
| Example 20 | 20 | 12.5 | 22.37 | 61.8 | 305.1 | 136.5 |
| Example 21 | 20 | 12.7 | 22.36 | 61.9 | 304.8 | 136.8 |
| Example 22 | 20 | 14.8 | 24.7 | 72.6 | 350.1 | 140.0 |
| Comparative Example 1 | 45 | 648.1 | 1080.27 | 77.8 | 17284.4 | 6481.6 |
| Comparative Example 2 | 50 | 371.5 | 618.66 | 79.9 | 9898.5 | 3711.9 |
| Comparative Example 3 | 50 | 137.9 | 229.98 | 63.4 | 3679.6 | 1379.9 |
| Comparative Example 4 | 50 | 88.7 | 147.81 | 120.5 | 2365.0 | 886.9 |
| Comparative Example 5 | 50 | 36.4 | 60.68 | 78.1 | 970.9 | 364.1 |
| Comparative Example 6 | 55 | 112.3 | 64.6 | 95.4 | 1982.5 | 2215.6 |

Table 4B

| | 0d | | 7d | | 15d | | 30d | |
|---|---|---|---|---|---|---|---|---|
| | Chromaticity /Hazen | Acidity /ppm | Chromaticit y /Hazen | Acidity /ppm | Hromaticity /Hazen | Acidity /ppm | Hromaticity /Hazen | Acidity /ppm |
| Example 1 | 5 | 10.4 | 7 | 11.4 | 15 | 13.7 | 18 | 16.4 |
| Example 2 | 6 | 10.5 | 8 | 11.6 | 14 | 13.9 | 20 | 16.7 |
| Example 3 | 5 | 10.3 | 8 | 11.3 | 17 | 13.5 | 19 | 16.3 |
| Example 4 | 6 | 10.6 | 8 | 11.7 | 6 | 14.0 | 21 | 16.8 |

(continued)

| | 0d | | 7d | | 15d | | 30d | |
|---|---|---|---|---|---|---|---|---|
| | Chromaticity /Hazen | Acidity /ppm | Chromaticit y /Hazen | Acidity /ppm | Hromaticity /Hazen | Acidity /ppm | Hromaticity /Hazen | Acidity /ppm |
| Example 10 | 3 | 9.5 | 9 | 10.4 | 14 | 12.5 | 16 | 15.0 |
| Example 11 | 6 | 11.1 | 15 | 12.2 | 18 | 14.6 | 20 | 17.5 |
| Example 12 | 5 | 11.3 | 15 | 12.5 | 16 | 15.0 | 20 | 18.0 |
| Example 13 | 3 | 8.5 | 5 | 9.6 | 7 | 12.2 | 13 | 14.4 |
| Example 14 | 4 | 9.9 | 5 | 11.0 | 8 | 13.4 | 19 | 15.2 |
| Example 15 | 3 | 8.6 | 5 | 9.8 | 7 | 12.5 | 14 | 14.8 |
| Example 16 | 4 | 9.3 | 6 | 10.5 | 9 | 13.1 | 16 | 15.9 |
| Example 17 | 3 | 8.6 | 5 | 9.7 | 7 | 12.4 | 13 | 14.6 |
| Example 18 | 3 | 8.5 | 5 | 9.6 | 7 | 12.3 | 13 | 14.5 |
| Example 19 | 3 | 8.7 | 5 | 9.8 | 7 | 12.3 | 13 | 14.5 |
| Example 20 | 3 | 8.6 | 5 | 9.7 | 7 | 12.3 | 13 | 14.6 |
| Example 21 | 3 | 8.5 | 5 | 9.6 | 7 | 12.2 | 13 | 14.5 |
| Example 22 | 4 | 9.3 | 6 | 10.4 | 9 | 13.0 | 16 | 15.5 |
| Comparative Example 1 | 12 | 32.0 | 26 | 35.2 | 39 | 42.3 | 48 | 55.0 |
| Comparative Example 2 | 13 | 22.9 | 24 | 25.1 | 35 | 30.2 | 45 | 39.2 |
| Comparative Example 3 | 13 | 27.5 | 25 | 32.5 | 30 | 39.6 | 46 | 48.6 |
| Comparative Example 4 | 12 | 26.4 | 26 | 30.2 | 35 | 36.2 | 45 | 47.1 |
| Comparative Example 5 | 14 | 29 | 24 | 31.9 | 32 | 38.3 | 40 | 49.7 |
| Comparative Example 6 | 15 | 30.6 | 28 | 33.8 | 35 | 49.6 | 49 | 56.4 |

In summary, the lithium fluoride of the present application, as the raw material, facilitates improving the purity of lithium hexafluorophosphate and lithium bis(fluorosulfonyl)imide, thereby enhancing the storage stability of the electrolytic solution including lithium hexafluorophosphate or lithium bis(fluorosulfonyl)imide.

Finally, it should be noted that the above various embodiments are merely used to illustrate the technical solutions of the present application and are not intended to limit them. Although the present application has been described in detail with reference to the foregoing embodiments, those of ordinary skill in the art should understand that they can still modify the technical solutions described in the foregoing embodiments or perform equivalent replacements of some or all of the technical features. Such modifications or replacements do not cause the essence of the corresponding technical solutions to depart from the scope of the technical solutions of the various embodiments of the present application.

## Claims

**1.** A lithium fluoride, wherein a mass content of carbonate in the lithium fluoride is less than or equal to 1000 mg/kg; a D10 of the lithium fluoride is less than or equal to 10 μm, a D50 is less than or equal to 20 μm, and a bulk density ranges from 0.9 $g/cm^3$ to 1.2 $g/cm^3$.

**2.** The lithium fluoride according to claim 1, wherein a purity of the lithium fluoride is greater than 99.8%, preferably, the purity of the lithium fluoride is greater than 99.9%.

3. The lithium fluoride according to claim 1 or 2, wherein the mass content of the carbonate is less than or equal to 600 mg/kg; and/or,

the D10 of the lithium fluoride is less than or equal to 7 μm, the D50 is less than or equal to 15 μm;
the mass content of the carbonate is greater than or equal to 0.1 mg/kg; and/or,
the D10 of the lithium fluoride is greater than or equal to 1 μm, the D50 is greater than or equal to 1 μm.

4. The lithium fluoride according to any one of claims 1 to 3, wherein the carbonate comprises lithium carbonate.

5. The lithium fluoride according to any one of claims 1 to 4, wherein the lithium fluoride further comprises impurities, wherein: iron ions ≤ 5 ppm, magnesium ions ≤ 8 ppm, calcium ions ≤ 8 ppm, sodium ions ≤ 10 ppm, potassium ions ≤ 10 ppm, aluminum ions ≤ 5 ppm, chloride ions ≤ 10 ppm, and sulfate ions ≤ 10 ppm.

6. The lithium fluoride according to any one of claims 1 to 5, wherein a mass content of moisture in the lithium fluoride is less than 500 mg/kg.

7. A preparation method for a lithium fluoride, comprising the following steps:

1) mixing lithium carbonate with water and performing a slurrying treatment to form a lithium carbonate slurry having a mass percentage content of lithium carbonate ranging from 10% to 30%; and
2) adding hydrofluoric acid to the lithium carbonate slurry, enabling the system to react at a pH ranging from 3 to 6 until the pH of a reaction system shows no change, to obtain a reaction product, and subjecting the reaction product to a microwave drying treatment to obtain the lithium fluoride;

wherein a reaction temperature ranges from 10 °C to 70 °C, preferably, the reaction temperature ranges from 30 °C to 60 °C.

8. The preparation method for the lithium fluoride according to claim 7, wherein a temperature of the slurrying treatment ranges from 10 °C to 30 °C.

9. The preparation method for the lithium fluoride according to claim 7 or 8, wherein a microwave frequency of the microwave drying treatment ranges from 900 MHz to 1100 MHz, and a microwave treatment time ranges from 1 h to 2 h.

10. The preparation method for the lithium fluoride according to any one of claims 7 to 9, wherein the hydrofluoric acid is added to the lithium carbonate slurry by dropwise addition, and a dropwise addition time ranges from 0.5 h to 3 h; and/or, a mass percentage content of the hydrofluoric acid ranges from 30% to 48%.

11. The preparation method for the lithium fluoride according to any one of claims 7 to 10, wherein the lithium carbonate is a high-purity lithium carbonate, and the impurities in the high-purity lithium carbonate comprise, by mass percentage content: iron ions ≤ 8 ppm, magnesium ions ≤ 12 ppm, calcium ions ≤ 11 ppm, sodium ions ≤ 14 ppm, potassium ions ≤ 14 ppm, aluminum ions ≤ 7 ppm, sulfate ions ≤ 80 ppm, and chloride ions ≤ 80 ppm.

12. The preparation method for the lithium fluoride according to any one of claims 7 to 11, wherein the slurrying treatment comprises the following steps:

dividing the lithium carbonate having a total mass of m into N parts, wherein the set of N is denoted as S={1, 2, ... , i-1, i, ... , N};
mixing the i-th part of lithium carbonate having a mass of $m_i$ with water having a mass of $M_i$, and performing the slurrying treatment at a stirring speed of $V_i$ until a viscosity is ≤ 2 mPa•s, to obtain an i-th system;
mixing the i-th system and the (i+1)-th part of lithium carbonate having a mass of $m_{i+1}$ with water having a mass of $M_{i+1}$, and performing the slurrying treatment at a stirring speed of $V_{i+1}$ until a viscosity is ≤ 2 mPa•s, to obtain an (i+1)-th system;
wherein, $0 < m_i/m < 1$, $1 \leq m_i/m_{i+1} \leq 10$, $1 \leq M_i/M_{i+1} \leq 10$, $0.5 \leq V_i/V_{i+1} \leq 2$, $i < N$, and $N \geq 2$; and
sequentially performing the slurrying treatment until all the lithium carbonate is mixed with all the water to form the lithium carbonate slurry.

13. The preparation method for the lithium fluoride according to claim 12, wherein the slurrying treatment comprises the

following steps:

dividing the lithium carbonate having the total mass of m into three parts, wherein, $1/2 \leq m_1/m < 1$, $0 < m_2/m \leq 1/3$, and $0 < m_3/m \leq 1/6$;
mixing a first part of lithium carbonate having a mass of $m_1$ with water having a mass of $M_1$, and performing the slurrying treatment at a stirring speed of $V_1$ until the viscosity is ≤ 1.6 mPa•s, to obtain a first system;
mixing the first system and a second part of lithium carbonate having a mass of $m_2$ with water having a mass of $M_2$, and performing the slurrying treatment at a stirring speed of $V_2$ until the viscosity is ≤ 1.6 mPa•s, to obtain a second system; and
mixing the second system and a third part of lithium carbonate having a mass of $m_3$ with water having a mass of $M_3$, and performing the slurrying treatment at a stirring speed of $V_3$ until the viscosity is ≤ 1.6 mPa•s, to obtain the lithium carbonate slurry;
wherein, $1 \leq m_1/m_2 \leq 4$, $1 \leq m_2/m_3 \leq 3$, $1 \leq M_1/M_2 \leq 4$, $1 \leq M_2/M_3 \leq 3$, $0.5 \leq V_1/V_2 \leq 1$, and $0.5 \leq V_2/V_3 \leq 1$

**14.** The preparation method for the lithium fluoride according to any one of claims 7 to 13, wherein after reacting until the pH of the reaction system shows no change in step 2), the method further comprises the following step:
adjusting the pH of the reaction system to range from 7 to 10.

**15.** A lithium fluoride prepared by the preparation method for the lithium fluoride according to any one of claims 7 to 14, wherein a mass content of carbonate in the lithium fluoride is less than or equal to 1000 mg/kg; and
a D10 of the lithium fluoride is less than or equal to 10 μm, a D50 is less than or equal to 20 μm, and a bulk density ranges from 0.9 $g/cm^3$ to 1.2 $g/cm^3$.

**16.** A lithium hexafluorophosphate, wherein the lithium fluoride according to any one of claims 1 to 6 or claim 15 is used as a raw material to react with phosphorus pentafluoride gas under an inert atmosphere to obtain the lithium hexafluorophosphate.

**17.** A lithium bis(fluorosulfonyl)imide, wherein the lithium fluoride according to any one of claims 1 to 6 or claim 15 is used as a raw material to obtain the lithium bis(fluorosulfonyl)imide in the absence of a solvent.

**18.** The lithium bis(fluorosulfonyl)imide according to claim 17, wherein the lithium fluoride is reacted with bis(fluorosulfonyl)imide under an inert atmosphere at a temperature ranging from 100 °C to 140 °C to obtain the lithium bis(fluorosulfonyl)imide.

TRANSLATION

**INTERNATIONAL SEARCH REPORT**

International application No. **PCT/CN2025/128671**

**A. CLASSIFICATION OF SUBJECT MATTER**

C01D 15/04(2006.01)i; C01D 15/00(2006.01)i; C01B 21/086(2006.01)i; H01M 10/0568(2010.01)i; H01M 10/0525(2010.01)i

According to International Patent Classification (IPC) or to both national classification and IPC

**B. FIELDS SEARCHED**

Minimum documentation searched (classification system followed by classification symbols)

IPC: C01D 15/-, C01B 21/-, H01M 10/-

Documentation searched other than minimum documentation to the extent that such documents are included in the fields searched

Electronic data base consulted during the international search (name of data base and, where practicable, search terms used)

CNABS, CNTXT, ENTXTC, ENTXT, VEN, DWPI, WPABS, WPABSC, CNKI, WEB OF SCIENCE: 氟化锂, 碳酸锂, 氟化氢, 氢氟酸, 高纯, 电池级, 粒径, 粒度, 堆积密度, 打浆, 混合, 搅拌, 浆料, 悬浊液, 分步, 分次, 六氟磷酸锂, 双氟磺酰亚胺锂, lithium fluoride, LiF, lithium carbonate, hydrofluoric acid, HF, high purity, battery-grade, particle diameter, particle size, D10, D50, bulk density, beat+, refine, mix+, stir+, agitati+, slurry, suspension, stepwise, batch-wise, LiPF6, lithium hexafluor ophosphate, lithium bis(fluorosulfonyl)imide, LiFSI, LiN(SO2F)2

**C. DOCUMENTS CONSIDERED TO BE RELEVANT**

| Category* | Citation of document, with indication, where appropriate, of the relevant passages | Relevant to claim No. |
|---|---|---|
| PX | CN 119706885 A (JIUJIANG TINCI MATERIALS TECHNOLOGY CO., LTD.) 28 March 2025 (2025-03-28)<br>claims 1-18 | 1-18 |
| X | CN 104364198 A (LANXESS DEUTSCHLAND GMBH) 18 February 2015 (2015-02-18)<br>claims 1-5 and 10-18, and description, paragraphs [0046]-[0053] and [0085]-[0089] | 1-6, 15, 16 |
| Y | CN 104364198 A (LANXESS DEUTSCHLAND GMBH) 18 February 2015 (2015-02-18)<br>claims 1-5 and 10-18, and description, paragraphs [0046]-[0053] and [0085]-[0089] | 7-14 |
| X | CN 106276829 A (RONGCHENG QING MU HIGH-TECH MATERIALS CO., LTD.) 04 January 2017 (2017-01-04)<br>claim 1 | 17, 18 |
| Y | CN 113072088 A (YAN HONGWEI et al.) 06 July 2021 (2021-07-06)<br>claim 1 | 7-14 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

Date of the actual completion of the international search: **20 January 2026**

Date of mailing of the international search report: **03 February 2026**

Name and mailing address of the ISA/CN

**China National Intellectual Property Administration (ISA/CN)**
**China No. 6, Xitucheng Road, Jimenqiao, Haidian District, Beijing 100088**

Authorized officer

Telephone No.

Form PCT/ISA/210 (second sheet) (July 2022)

TRANSLATION

INTERNATIONAL SEARCH REPORT

International application No. **PCT/CN2025/128671**

**C. DOCUMENTS CONSIDERED TO BE RELEVANT**

| Category* | Citation of document, with indication, where appropriate, of the relevant passages | Relevant to claim No. |
|---|---|---|
| A | CN 102354743 A (CHERY AUTOMOBILE CO., LTD.) 15 February 2012 (2012-02-15) entire document | 1-18 |
| A | CN 101723414 A (DO-FLUORIDE CHEMICALS CO., LTD.) 09 June 2010 (2010-06-09) entire document | 1-18 |
| A | CN 108545763 A (JIANGSU JIUJIUJIU TECHNOLOGY CO., LTD.) 18 September 2018 (2018-09-18) entire document | 1-18 |
| A | CN 116239131 A (YIDU XINGFA CHEMICAL CO., LTD.) 09 June 2023 (2023-06-09) entire document | 1-18 |
| A | CN 118666294 A (BAIJIERUI (JING MEN) ADVANCED MATERIALS CO., LTD.) 20 September 2024 (2024-09-20) entire document | 1-18 |
| A | JP 2008156190 A (STELLA CHEMIFA CORP.) 10 July 2008 (2008-07-10) entire document | 1-18 |

Form PCT/ISA/210 (second sheet) (July 2022)

TRANSLATION

**INTERNATIONAL SEARCH REPORT**
**Information on patent family members**

International application No.
**PCT/CN2025/128671**

| Patent document cited in search report | | | Publication date (day/month/year) | Patent family member(s) | | | Publication date (day/month/year) |
|---|---|---|---|---|---|---|---|
| CN | 119706885 | A | 28 March 2025 | None | | | |
| CN | 104364198 | A | 18 February 2015 | PL | 2855357 | T3 | 18 May 2020 |
| | | | | AU | 2013265257 | A1 | 04 December 2014 |
| | | | | AU | 2013265257 | B2 | 02 February 2017 |
| | | | | EP | 2855357 | A1 | 08 April 2015 |
| | | | | EP | 2855357 | B1 | 13 November 2019 |
| | | | | ES | 2766777 | T3 | 15 June 2020 |
| | | | | CL | 2014003210 | A1 | 16 January 2015 |
| | | | | WO | 2013174938 | A1 | 28 November 2013 |
| | | | | AU | 2017202787 | A1 | 18 May 2017 |
| | | | | AU | 2017202787 | B2 | 30 August 2018 |
| | | | | CA | 2874608 | A1 | 28 November 2013 |
| | | | | CA | 2874608 | C | 21 July 2020 |
| | | | | US | 2015140332 | A1 | 21 May 2015 |
| | | | | US | 9923232 | B2 | 20 March 2018 |
| | | | | KR | 20150016511 | A | 12 February 2015 |
| | | | | KR | 102070474 | B1 | 29 January 2020 |
| | | | | JP | 2015518811 | A | 06 July 2015 |
| | | | | JP | 6351575 | B2 | 04 July 2018 |
| CN | 106276829 | A | 04 January 2017 | None | | | |
| CN | 113072088 | A | 06 July 2021 | None | | | |
| CN | 102354743 | A | 15 February 2012 | None | | | |
| CN | 101723414 | A | 09 June 2010 | None | | | |
| CN | 108545763 | A | 18 September 2018 | None | | | |
| CN | 116239131 | A | 09 June 2023 | None | | | |
| CN | 118666294 | A | 20 September 2024 | None | | | |
| JP | 2008156190 | A | 10 July 2008 | JP | 5122809 | B2 | 16 January 2013 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202411729269

### Non-patent literature cited in the description

- *GB/T 3603*